# EUROPEAN PATENT SPECIFICATION

(11) **EP 2 215 292 B1**
(45) Date of publication and mention of the grant of the patent: **26.02.2020**
(21) Application number: 08851126.6
(22) Date of filing: 12.11.2008
(51) Int. Cl.: D01D 5/00

(54) **FINE FIBER ELECTRO-SPINNING EQUIPMENT, FILTER MEDIA SYSTEMS AND METHODS**
FEINFASERELEKTROSPINNANLAGE, FILTERMEDIENSYSTEME UND VERFAHREN
ÉQUIPEMENT D'ÉLECTROFILAGE D'UNE FIBRE FINE, SYSTÈMES ET PROCÉDÉS DE MILIEU FILTRANT

(30) Priority: 20.11.2007 US 942937
(43) Date of publication of application: 11.08.2010
(73) Proprietor: Elmarco s.r.o., 46001 Liberec XI (CZ)
(72) Inventor: GREEN, Thomas, B., Liberty Township Ohio 45011 (US); KING, Scotty, L., Hamilton Ohio 45013 (US); LI, Lei, West Chester Ohio 45069 (US)
(74) Representative: Pronovem
(86) International application number: PCT/US2008/083219
(87) International publication number: WO 2009/067368

(56) References cited:
- EP-A- 1 059 106
- EP-A1- 1 637 637
- EP-A2- 0 239 339
- WO-A-2009/010020
- WO-A1-03/016601
- DE-A1- 10 136 255
- GB-A- 1 484 584
- US-A- 4 069 026
- US-A- 4 144 553
- US-A- 4 287 139
- GUPTA P ET AL: "Electrospinning of linear homopolymers of poly(methyl methacrylate): exploring relationships between fiber formation, viscosity, molecular weight and concentration in a good solvent" POLYMER, ELSEVIER SCIENCE PUBLISHERS B.V, GB, vol. 46, no. 13, 17 June 2005 (2005-06-17), pages 4799-4810, XP004904227 ISSN: 0032-3861

## Description

### FIELD OF THE INVENTION

The present invention generally relates to electrostatic spinning of fine fibers from a polymeric solution in an electrostatic field created by a voltage differential between a spinning electrode and a collecting electrode and more particularly relates to a new spinning electrode equipment arrangement and/or electro-spinning methods. Other aspects of the invention may also relate to filter media production systems and methods, that is application of fine fibers to filter media so as to create a high efficiency layer upon the filtration media for filtering contaminants out of a fluid stream.

### BACKGROUND OF THE INVENTION

The production of fine fibers from polymeric solution through electrostatic spinning (a.k.a. "electro-spinning") via an electric field created by a voltage differential between a collecting electrode and a spinning electrode is known. For example, as shown in U.S. Patent No. 6,743,273, polymeric solution is pumped to a spinning electrode in the form of a rotating emitter in which the pump solution is pumped from a reservoir and forced through holes in the emitter. Upon exiting, the electrostatic potential between a grid and the emitter imparts a charge which causes the liquid to be "spun" as thin fine fibers where they are collected on a substrate as an efficiency layer. During this process, the solvent is evaporated off the fine fibers which draws down the fiber diameter during their flight.

Another example of an electrostatic spinning device is shown in Patent Publication Nos. US2006/0290031 and WO2006/131081. The spinning electrode designs disclosed in these applications are in the form of a rotating drum-like body that may take several different forms. The drum is situated and bathed within a polymeric solution reservoir and is rotated about an axis perpendicular relative to the path of a collection media. By rotating the drum through the polymer solution, the spinning surface of the charged electrode is coated with the polymeric solution. Various drum like body variations are shown throughout these two patent publications to include providing a multiple pointed tips to create discrete spinning locations where fine fibers are generated.

Document US4144553 discloses an apparatus for use with a device for producing a suitable electric field to effect the electrodynamic spraying of solutions, dispersions, or mixtures of solids. The apparatus also enables the electrospinning of polymeric fibers. The apparatus includes at least one spray station for spraying into a given spray zone. Each spray station includes two spaced apart tanks for holding the medium to be sprayed and which are disposed on both sides of the spray zone. An endless band is supported by pulleys disposed at each tank for circulating the band and constantly running a run thereof through the tanks. Squeegees are disposed at each tank to remove excess medium from the band. Inlet and outlet connections in each tank effect a desired level of the medium therein.

Document WO 03/016601 discloses a device for the production of fibers in an electrostatic spinning method, comprising a storage vessel for a polymer solution or a polymer melt, a conveyor device arranged in the storage vessel, at least one sputter electrode or at least one sputter metal sheet and a counter electrode. The at least one sputter electrode or the at least one sputter metal is disposed on the conveyor device in such a way that the polymer solution or polymer melt conveyed out of the storage vessel by the conveyor device is drained onto the at least one sputter electrode or the at least one sputter metal sheet. Also disclosed is a method for electrostatic spinning of polymers using the device.

Document EP 1637637 relates to a method of producing fibrous aggregate. The method comprises: a supplying and discharging step in which a fiberizable liquid is supplied from a means for storing a fiberizable liquid to a means for discharging a fiberizable liquid via a supplying pipe, and the fiberizable liquid is discharged from the discharging means The method further comprises a fibers-collecting step in which fibers drawn and fiberized by applying an electrical field to the discharged fiberizable liquid are accumulated directly on a collecting surface of a collector while the collecting surface is unidirectionally conveyed to form the fibrous aggregate. The discharging means is carried on a support capable of moving along an endless track capable of rotationally travelling between a pair of rotating shafts. The fiberizable liquid is discharged from the discharging means while the support is revolved at a constant velocity under the condition that a moving direction of a linear motion area in the endless track conforms to a width direction of the collecting surface.

The present invention provides for improvements over the existing state of the art as it relates to electrostatic fine fiber production and spinning electrode design and/or in relation to the production of fine fiber filtration media.

### BRIEF SUMMARY OF THE INVENTION

A first aspect of the present invention relates to an apparatus for the production of fine fibers onto a collection media. The apparatus comprises a first electrode; a second electrode spaced from the first electrode, the second electrode including strand entrained upon at least two guides; an entrance region and an exit region spaced apart along a first path, wherein the collection media is adapted to be driven along the first path from the entrance region to the exit region in spaced relation from the second electrode. The apparatus further comprises a drive unit adapted to drive the strand, along the at least two guides for movement along a second path that is transverse to the first path; a voltage source arranged to generate a voltage differential between the first and second electrodes for generating the spinning of fine fibers. The strand is an endless chain of a plurality of discrete segments separated by gaps, wherein each segment typically provides at least one discrete spinning location wherein polymer fine fibers are electrspun during operation. The strand is an endless strand driven about an endless path, wherein the second path is a part of the endless path, the endless path further including a return path spaced from the second path, the endless strand being farther away from the first electrode along the return path than the second path.

Preferred embodiments of the first aspect of the present invention are disclosed in the appended claims.

A second aspect of the present invention relates to a filter media production system comprising a roll of substrate material supplying a sheet of substrate material along a first path through an entrance region to an exit region of a fine fiber generation machine, the sheet having opposed side edges generally parallel to the first path. The fine fiber generation machine includes at least one endless strand and a drive unit driving the strand along a second path from a first guide to a second guide that is transverse relative to the first path, the strand being wetted with a polymer solution and subject to a voltage differential to generate fine fibers that are deposited upon the substrate material. The strand is driven about an endless path, wherein the second path is a part of the endless path. The endless path further includes a return path spaced from the second path, the strand being farther away from the first path along the return path than the second path.

A preferred embodiments of the second aspect of the present invention is disclosed in the appended claims.

A second aspect of the present invention relates to a method of generating fine fibers, comprising:
∘ electro-spinning fine fibers from an electrode at a plurality of spinning locations arranged in a linear array from a polymer solution coating on the electrode;
∘ facilitating relative linear movement between the collection media and spinning locations with the spinning locations in spaced relation to the collection media;
∘ depositing the fine fibers on the collection media;
∘ maintaining a constant spacing between the spinning locations and the collection media;
∘ periodically regenerating each of the spinning locations with polymer solution coating;

The linear array includes multiple rows of spinning locations, the method including:
∘ moving at least one first row of the spinning locations in a first direction; and
∘ moving at least one second row of the spinning locations in a second direction.

Preferred embodiments of the third aspect of the present invention are disclosed in the appended claims.

Other aspects, objectives and advantages of the invention will become more apparent from the following detailed description when taken in conjunction with the accompanying drawings.

### BRIEF DESCRIPTION OF THE DRAWINGS

The accompanying drawings incorporated in and forming a part of the specification illustrate several aspects of the present invention and, together with the description, serve to explain the principles of the invention. In the drawings:
FIG. 1 is a partly schematic side elevational view of a fine fiber generation machine which may be used for production of filtration media in accordance with an embodiment of the present invention;
FIG. 2 is a partly schematic plan view of the machine shown in FIG. 1;

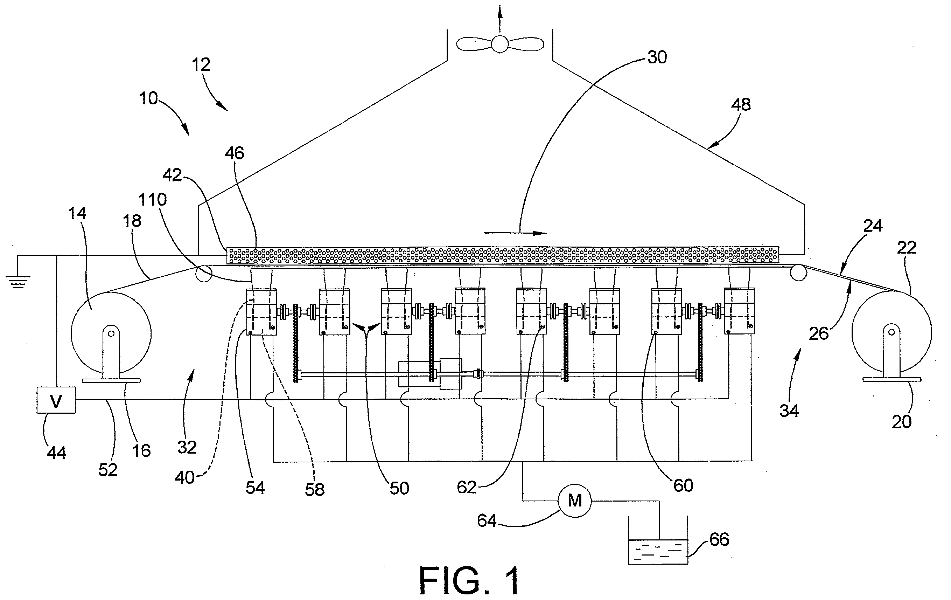

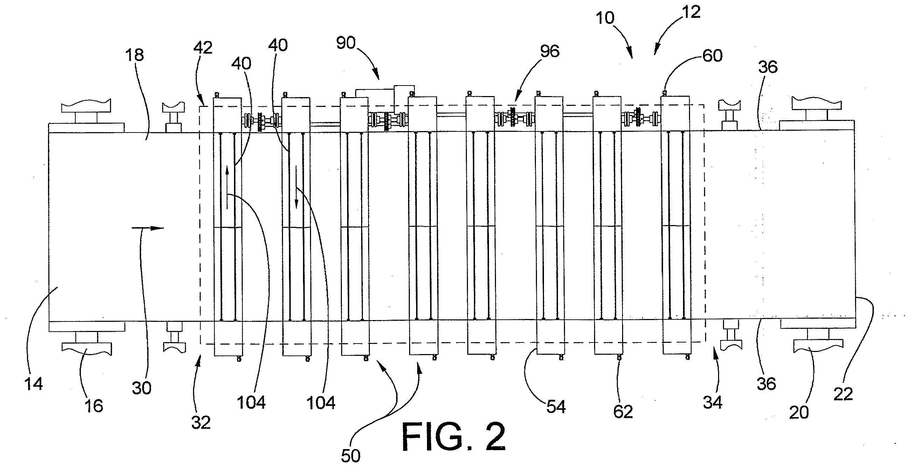

FIG. 2 is a partly schematic plan view of the machine shown in FIG. 1;

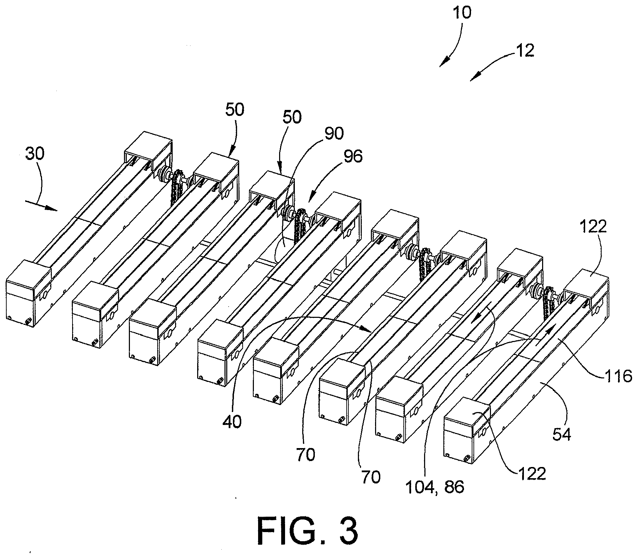

FIG. 3 shows an isometric view of a plurality of polymeric solution basins and electro-spinning electrodes and appropriate drive mechanism for driving the same in accordance with an embodiment of the present invention and which may be incorporated and used in the schematic illustration shown in FIG. 1;

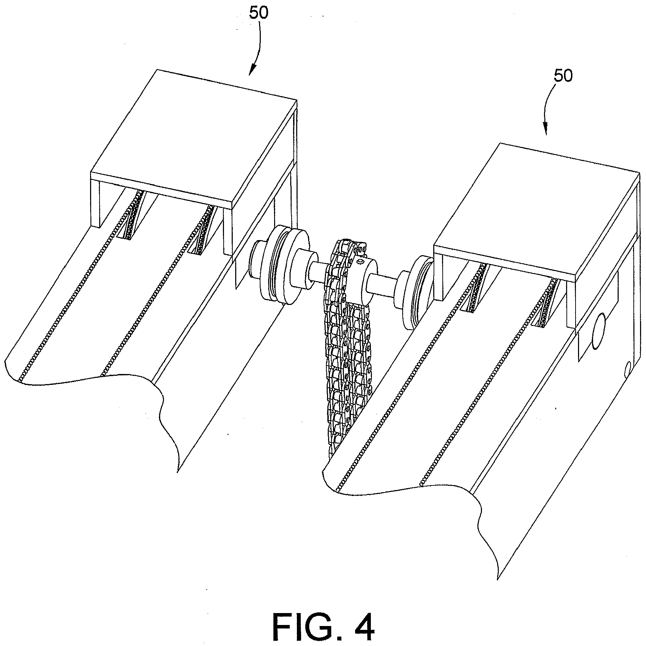

FIG. 4 is a enlarged view of a portion of the apparatus shown in FIG. 3;

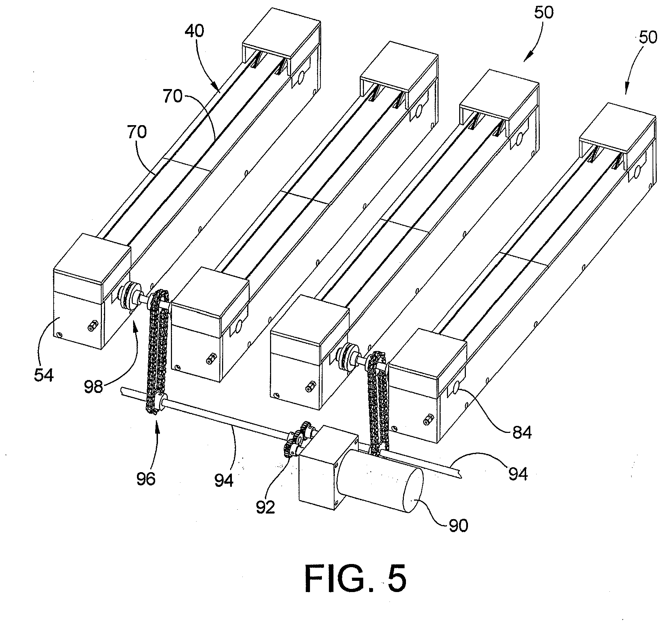

FIG. 5 is an enlarged and different isometric view of a portion of the apparatus shown in FIG. 3 to better illustrate an example of a drive unit;

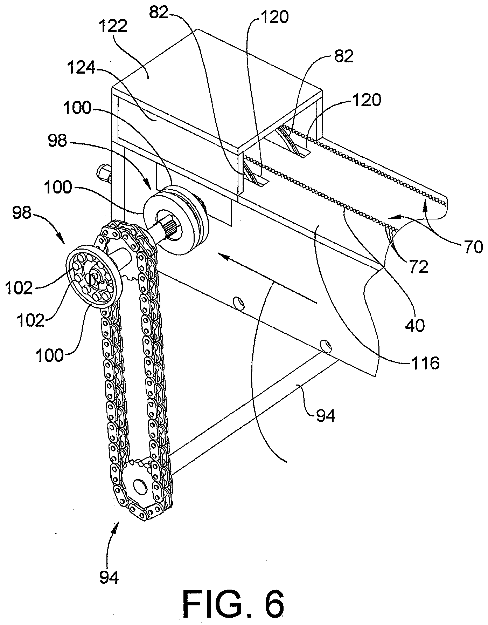

FIG. 6 is an enlarged side view of one of the individual units of the apparatus shown in FIG. 3;

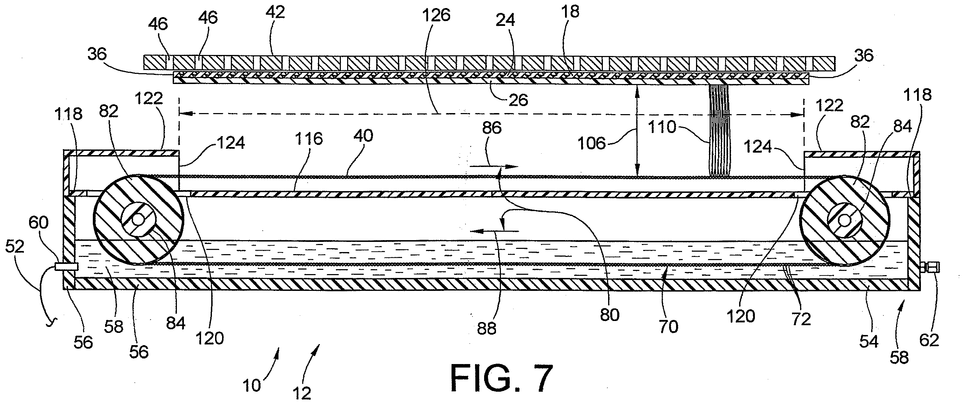

FIG. 7 is a cross sectional view of one of the electro-spinning cells or units shown in FIG. 3;

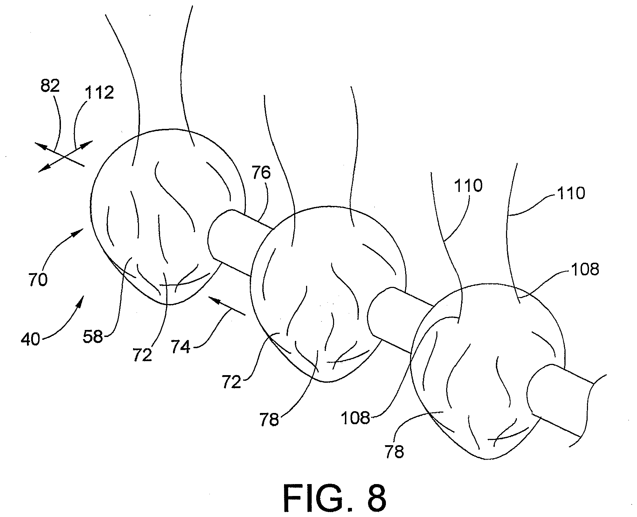

FIG. 8 is a close up demonstrative illustration of a portion of the endless chain electrode used in the aforementioned figures for use in explaining how at least two spinning locations are typically formed from a polymeric solution coating on each of the individual chain segments during operation;

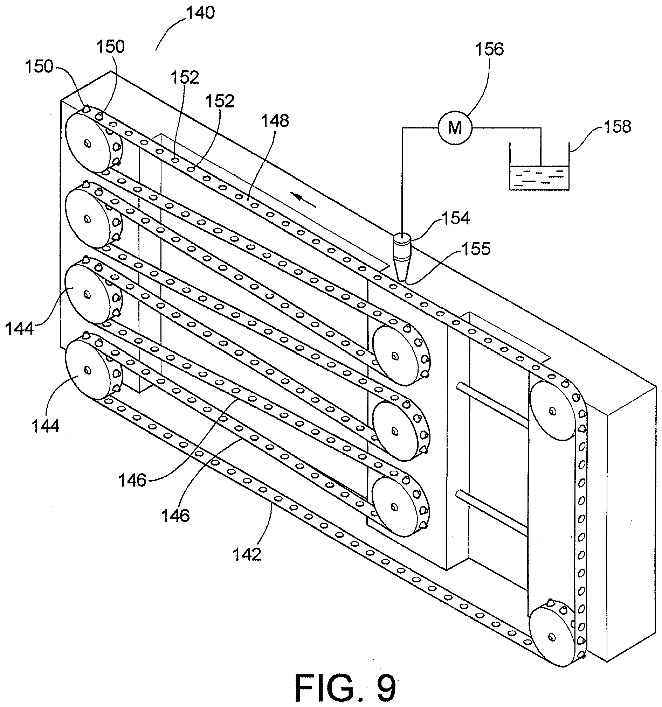

FIGS. 9 is perspective illustration of a serpentine belt electro-spinning apparatus according to an alternative embodiment of the present invention; and

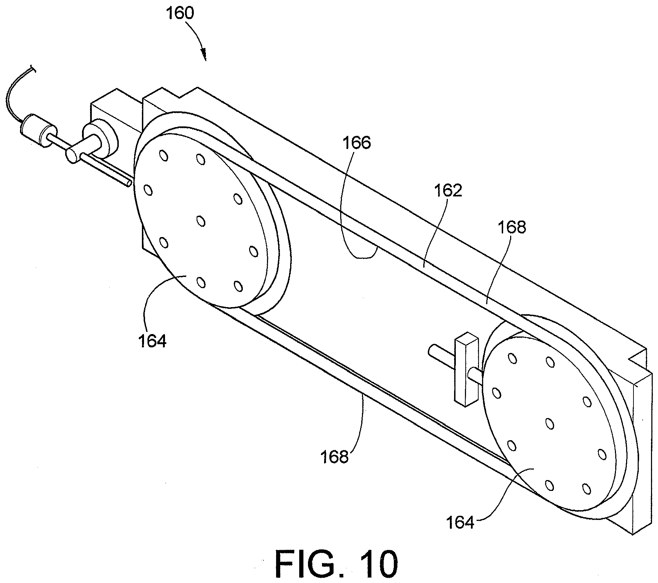

FIG. 10 is yet another alternative embodiment of the present invention involving two guide wheel pulleys driving an endless belt with a single needle dispensing location for wetting the belt with polymer solution during operation.

### DETAILED DESCRIPTION OF THE INVENTION

For purposes of illustration, an embodiment according to the invention is illustrated in partial schematic form as a fine fiber production machine 10 as part of a filter media production system 12 in FIGS. 1 and 2. The production system includes a replaceable master roll 14 of fine fiber collection media substrate shown in the form of a filter media substrate roll 14 that is arranged upon a unwind machine 16. The continuous substrate sheet 18 is fed from the filter media substrate roll 14 through the fine fiber production machine for collecting fine fibers and is rewound by a rewind machine 20 on a filter media roll 22 having a filter media substrate layer 24 and a high efficiency fine fiber layer 26. After the master substrate roll 14 is depleted, a new filter media substrate roll can be replaced thereon as needed.

As shown, the sheet 18 of media runs along a first direction 30 through the fine fiber production machine 10 generally from an entrance region 32 to an exit region 34. The sides 36 of the filter media sheet generally run parallel with this first direction 30 naturally.

The fine fiber production machine includes an electrostatic field that is generated between first and second electrodes to include one or more spinning electrodes 40 whereat fine fibers are generated on the one hand and a collection electrode 42 to which the fine fibers are drawn under the force provided by the electrostatic field. As shown, the media sheet 18 is typically run between the spinning electrode 40 and the collection electrode 42 such that the fine fibers are usually not deposited upon the collection electrode 42 but instead deposited on the filter media sheet 18. The collection electrode 42 is preferably a conductive perforated plate of substantial surface area for maximizing locations to where threads are collected. Many small holes 46 are formed in the perforated plate to facilitate vacuum suction of evaporated solvent through a blower driven ventilation hood system 48 that evacuates evaporated solvent to an external location such as outside a facility. As schematically shown, the collection electrode 42 spans at least the width of media and width a length of spinning electrodes 40, collectively, as does the ventilation hood system 48. The filter media substrate layer runs in contact and is supported against the collection electrode 42 under suction pressure against gravity. Preferably, this support arrangement is flat and planar as illustrated.

To generate the electrostatic field, a high voltage supply is provided and that is connected to at least one of the electrodes 40, 42 for generating a high voltage differential between the electrodes 40, 42 on the order of between 10,000 and 150,000 volts or more (and more preferably for the production of fine fibers for filter media between 75,000 and 120,000 volts), although other voltage ranges may be possible. Typically, the collection electrode 42 will simply be grounded however, the voltage generation source may provide a potential to the collection electrode other then ground such that the spinning electrode may not necessarily be at such a high voltage potential relative to ground. In either event, a voltage source is arranged to generate a voltage differential between the first and second electrodes sufficient for generating the spinning of fine fibers from polymeric solution through an electrostatic field.

In one embodiment, an apparatus includes a single spinning electrode 40. For example, the single electrode of FIG. 7 may be used to form its own machine. As shown in the other figures, multiple spinning electrodes 40 can be provided between the entrance region 32 and the exit region. One or more spinning electrodes may be assembled as a unit in an individual fine fiber production cell 50. For example, multiple fine fiber production cells 50 can be arranged between entrances and exit regions as shown in FIGS. 1-3. Each of the fine fiber production cells 50 is coupled to the high voltage supply 44 via an electrical wire 52 and each of the cells are subject to the same electrical voltage potential and differential relative to the collection electrode 42.

Turning in greater detail to an individual production cell 50, with reference to FIG. 7, each cell 50 includes a dipping basin 54 which may take the form of a plastic walled box like vessel structure. Each of the walls 56 of the dipping basin 54 are constructed from insulating material such as plastic (but a plastic or other insulating material that is not considered soluble for the planned solvents to be employed) so as to prevent unintentional discharge of the voltage communicated into the basin 54 from the high voltage supply 46. The dipping basin 54 contains a polymeric solution 58, comprising a suitable solvent and a suitable polymer for electro-spinning of fine fibers.

Mounted into one of the plastic walls 56 is the metal electrical terminal 60 that extends through one of the walls 56 and that is connected by an electrical wire 52 to the high voltage supply 44. The terminal 60 is in communication with the polymeric solution 58 and thereby charges the solution for communication of the voltage potential therethrough along to the spinning electrode 40.

Additionally, to provide for periodic replenishment of the polymeric solution, a fluid coupling such as quick connect coupling 62 that conventionally includes a one-way check valve is mounted into and through one of the walls 56 to allow for periodic replenishment of the polymeric solution through the addition of more such solution. This may be hooked up to a fluid replenishment system that periodically replenishes the basin with more polymeric solution to include a fluid metering unit 64 and a reservoir 66. Control valves or individual metering units (one dedicated to each cell) may be provided to individually control the solution in each cell.

As shown, the spinning electrode 40 may take the form of a strand and as shown in the embodiment, an endless strand in the form of an endless chain 70. The endless chain 70 is preferably made of metal or other conductive material such that it is readily conductive and is in electrical circuit with the high voltage supply 44 by virtue of electrical communication provided by and through the polymeric solution 58. The endless chain 70 preferably includes a plurality of individual discrete segments 72 as shown best in FIG. 8. Each of the discrete segment is connected and spaced from another adjacent segment by a gap 74 and spacer segment 76. In this embodiment, the segments 72 are beads that form a bead chain in which the individual beads that take the form of generally spherical balls 78. For example, a stainless steel metal beaded chain can provide for the spinning electrode.

The endless chain 70 is mounted along an endless path 80 around two guides which may take the form of movable guide wheels 82 that are spaced at opposite ends of the dipping basin 54. The guide wheels 82 may be sheave like structures as shown and can be metal, plastic or other suitable material. The guide wheels 82 are mounted for rotation on insulating axels 84 such as plastic material axels so as to insulate the voltage potential within the dipping basin 54. The axels 84 are rotatable relative to the walls 56 of the dipping basin 54. The endless chain 70 is entrained about the guide wheels 82 to include a linear spinning path 86 that is exposed outside of the polymeric solution 58. The spinning path 86 faces and is closest to the collection electrode 42. The endless chain 70 also has a linear return path 88 which runs through the dipping basin 54 and the polymeric solution 58 for the purpose of periodically regenerating the segments of the endless chain, that is by dipping the chain and running it through the polymeric solution. At any one time a portion of the chain is being regenerated with solution and a portion is exposed for electro-spinning.

To drive the endless chain 70 along the endless path 80 about the guide wheels 82, a suitable drive unit is provided, which includes a rotary motor 90 having a rotary output upon an output shaft 92. The output is then transferred through gearing to a transmission shaft 94 that transmits through the chain and sprocket mechanism 96 to electrical isolation drives 98. These drives 98 include separated but closely arranged housings 100 (See Fig. 6) containing permanent magnets 102 that are configured in an offset arrangement (magnets interposed between each other) as shown such that when operated rotation of one of the housings 100 causes the other housing 100 to rotate due to the interspersed relation of the permanent magnets 102 among the two housings and the repulsion or attraction generated thereby. One of the drive housings 100 is mounted to at least one of the guide wheels 86 for each dipping basin cell so that the guide wheel also doubles as a drive wheel to drive the endless chain 70 about the endless path 80. Of course, other appropriate drive units may be provided to drive the endless chain 70 about the endless path 80.

As can be seen from FIGS. 1, 2 and 7, the linear spinning path 86 portion of the endless chain 70 extends transversely relative to the first direction for movement along a second direction 104 that is preferably transverse (that is either perpendicular or otherwise lying crosswise such as diagonally or obliquely) relative to the first direction 30. As a result, as the sheet of media is moving along in the first direction 30 from the entrance region 32 to the exit region 34 the individual segments 72 of the endless chain 70 are moving along in the second direction 104 across the substrate sheet between opposed sides 36.

Additionally, as shown best in FIG. 7, there can be a constant spacing distance 106 of the segments 72 from the collection electrode 42 and/or the media sheet 18 as the individual segments 72 move across the entire linear spinning path 86 from one end to the other. Such a constant target distance may include minor variations due to sag in the endless chain which do not materially affect the fine fiber production. As a result, the spinning target spacing distance 106 can be tightly controlled and is not subject to wide variations as may be the case in rotating drum applications. To the extent there is sag in the endless chain along the linear spinning path 86 that is undesirable, intermediate guide supports (not shown) can be provided along the path that which may also periodically regenerate polymeric coating upon the endless chain. Such additional intermediate support apparatus may be provided in the event that electro-spinning across much longer spans are desired. Intermediate regeneration could be accomplished by pumping polymeric solution from a needle onto the chain and/or through a transfer wheel that picks up solution and transfers it onto the endless chain. In any event, to the extent there is any minor sag in the endless chain along the spinning path, it still is literally considered to include a constant spacing distance 106 within the meaning and context of the present invention and claims appended hereto, and the movement along the spinning path 86 will still literally be considered to be linear within the context of the present invention and claims appended hereto.

As evident from the foregoing, the linear spinning path 86 and movement direction of the endless chain 70 is transverse relative to the movement direction 30 of the collection media sheet 18. Preferably and as shown this transverse arrangement is preferably perpendicular although it is appreciated that other transverse arrangements including angles other than 90° may be used. Thus, in the context herein, transverse includes but does not mean perpendicular but is broader in the sense and is meant to also include a strand for electro-spinning generation that moves generally crosswise in a direction generally between the opposed sides 36 of the collection media sheet 18.

According to an operational mode embodiment, during operation the filter media collection sheet 18 runs along the first direction continuously as well as the endless chain 70 moving about the endless path 80 continuously. However, it will be appreciated that intermittent operation of either can be accomplished if desired for various purposes.

During operation and as shown in FIG. 7 and 8, the endless chain 70 along the linear spinning path 86 includes multiple spinning locations 108 which are linearly aligned in an array of at least one row and as shown two rows. The spinning locations are spaced by the gaps 74 which in the case of the present embodiment are equally spaced gaps 74 such that the spinning locations 108 are equally spaced along the linear spinning path 86. The reason is that configuration of the spherical balls 78 generates typically two spinning locations 108 for the formation of fine fibers 110. As shown, the spinning locations 108 are on opposite sides of the spherical ball 78 and spaced apart along a lateral axis 112 that is perpendicular relative to the linear spinning path 86 by virtue of electrical repulsion (e.g. the charged spinning threads tend to repel each other). Thus the curved nature of the individual segments 72 is beneficial in producing the desired spacing between spinning locations and providing multiple spinning locations per each individual segment thereby producing more fine fiber and controlling the production of fine fiber for uniformity purposes. However, it would be appreciated other configurations could be made such as providing a sharp edge for the production of a spinning location or a non-segmented strand.

In the case of water soluble polymers in which water is used as the solvent, the apparatus may be used in an uncovered state. However, the disclosed embodiment has a significant optional and preferred feature that provides for significant advantages over traditional dipping systems by providing a central cover 116 that is arranged to substantially cover the otherwise open end 118 of the dipping basin. With this arrangement, it can be seen that the endless chain electrode is driven around the cover to include a first portion which is contained within the dipping basin and substantially encapsulated therein by the cover and a second portion that is exposed and capable of generating fine fibers. The cover 116 can be interposed between different parts of the spring electrode as shown and can substantially enclose dipping of the electrode. The cover 116 extends substantially between the spaced apart guide wheels 82 and in the present embodiment may include guide wheel slots 120 receiving the guide wheels therethrough and providing an opening through which the endless chain 70 can pass. In the case of the present embodiment, including two endless chains 70 per cell 50 with only two guide wheels 82 provided for each endless chain 70, a total of four slots 120 may be provided. Additional slots may be provided for additional guide wheels where other support apparatus as may be desired or needed. The cover 116 is particularly advantageous when the polymer solution involves a volatile solvent and/or a solvent other then water. For example, certain solvent materials can evaporate more quickly than water and therefore make it more difficult to maintain a desirable polymer to solution ratio. The cover 116 minimizes the amount of solvent that is exposed externally at any one moment and thereby minimizes solvent loss. This is also perhaps more advantageous from a materials savings and environmental standpoint.

For example, a comparison of a covered endless beaded chain embodiment according to the disclosure of FIGS. 1-8 with a commercially available machine that has an uncovered configuration, namely, an El-Marco NANOSPIDER model NS-8A 1450 machine, available from El-Marco, s.r.o., Liberec, Czech-Republic has shown considerable solvent savings over a 16 hour testing period. In particular, for spinning polymer fine fibers from a 12% polymer solution (polymer to solution ratio), such as nylon 6 using a 1/3 formic acid and 2/3 acetic acid solvent, replenishment of the local polymer solution in the uncovered dipping basin of the El-Marco machine has required replenishment of the dipping basin with a much diluted polymer solution (and hence more solvent) to maintain the 12% solution in the dipping basin due to evaporated solvent loss. Specifically, the El-Marco machine required a solvent rich replenishment solution of a 2% solution. Whereas, an embodiment has been able to achieve maintenance of a 12% polymer solution with a more polymer rich solution of a 7% replenishment solution due to less solvent evaporation. In making this comparison, it is acknowledged that not all of the parameters of the machines are equal (e.g. among other things: the electrodes are differently configured and driven differently, the collection media flow rate may be different, the dipping basin tub size can be smaller in an embodiment of the invention considering it can be thinner in the movement direction of the collection media as it need not accommodate rotation of a drum-like electrode).

Nevertheless, considering evaporation relates in large part to available surface area (and such things as surface agitation and air flow - e.g. around the entry and exit regions of the dipping portion of the electrode), solvent savings is primarily due to the basin and electrode covering technique disclosed herein. For example, the embodiments of FIGS. 1-8 substantially cover the surface of polymer solution and also the electrode dipping entry and exit locations (areas of agitation). As such, other parameters are not seen to impact evaporation loss in a significant manner. In comparing machines, it has been calculated that the solvent evaporation savings may be up to 60% or more. Much of this advantage is considered due to the covering of the electrode during dipping and substantially enclosing the polymer solution. As such, preferably enough covering is provided to reduce solvent loss by at least 25% and more preferably by at least 50%.

In practicing one embodiment, the cover 116 can be fastened securely to the walls of the dipping basin 54 by virtue of screws or otherwise. The configuration and attachment of the cover may depend upon electrode configuration. Other arrangements or other types of electrode spinning systems are possible. Preferably, the cover reduces evaporation from solvent of the polymer solution by at least 25% as compared to an uncovered electrode spinning apparatus and even more preferably by at least 50%. For example, savings of approximately two-thirds of solvent is demonstrated by the above example.

Additionally, the illustrated embodiment includes end covers 122 at opposed ends of the cell 50 that are mounted to wall extensions 124 that extend above the cover 116 such that the end covers 122 are positioned over the opposed ends of the endless chain 70 and are disposed over the guide wheels 82. The end covers 122 also serve to reduce solvent evaporation but also serve as shrouds to limit the span of fine fiber production. As shown, the end cover span 126 between the inner edges of opposed end covers is about the same and preferably just slightly larger then the width of the corresponding media sheet 18 defined between opposed sides 36. The end cover 122 may be adjustable and/or interchangeable with other longer end covers such that the span 126 may be adjustable to accommodate different widths of collection media sheets 18 that may be run through the fine fiber production machine 10.

Turning to FIG. 9, an alternative embodiment of the present invention is illustrated as a fine fiber production machine 140 that is similar in many respects to the first embodiment. For example, this embodiment similarly employs a strand that is wetted with polymeric solution and that can maintain a constant spacing of spinning locations relative to the collection media. Further, this embodiment also includes an endless strand that is driven about an endless path to provide a spinning electrode. As such, details will be directed toward some of the more salient differences.

In this embodiment, the fine fiber production machine includes an endless serpentine belt 142 that is driven in an endless path around multiple guide wheels 144. The serpentine belt 142 is preferably made of a conductive material and may take the form of a continuous endless metal band as shown to provide for a spinning electrode. The serpentine belt 142 includes several linear segments 146 between adjacent guide wheels 144 that each provide for multiple spinning locations. Generally, the edge 148 that would be disposed closest to the collection electrode provides for the spinning locations. This edge 148 can be serrated to provide multiple discrete and equally spaced sharp edges (not shown) and/or can be configured with pockets and the like to provide for local polymeric solution fluid reservoirs along the edge 148. Preferably, the guide wheels include teeth or other positioning structure which engage holes 152 and other similar positioning structure on the belt 142 such that the edge can be maintained at a constant spacing and thereby maintain a constant spacing distance 106 if such a constant spacing is desired.

The serpentine belt 142 is subject to a voltage source to generate the electrostatic field thereby serve as a spinning electrode. To provide for polymeric solution along the belt 142, this embodiment includes a wetting supply system that includes one or more needles 154 having control orifices 155 spaced adjacent to the edge 148 of the serpentine belt 142. Additionally, the needles are connected along fluid lines to a pressurized polymeric solution source afforded by a pump 156 that delivers polymeric solution from a reservoir 158. Thus, the strand generation need not necessarily be dipped but can be alternatively wetted in other means in accordance with this embodiment. Additionally, this embodiment also affords the ability for dipping the electrode in a dipping basin. For example, portions of the serpentine belt can be arranged to run vertically as opposed to horizontally due to the flexible nature of a serpentine belt. Alternatively, the right hand portion may be dipped in a dipping vessel containing polymeric solution with the collection media arranged to run vertical as opposed to horizontally.

Yet a third embodiment of the present invention is shown in FIG. 10 as a fine fiber production machine 160 much like the prior embodiment of FIG. 9. As such, discussion will be limited. This embodiment similarly can employ a polymeric supply system comprising a needle control orifice, pump and polymeric solution reservoir. This embodiment also employs an endless strand which in this embodiment takes the form of a more simplistic metal band 162 driven around two pulleys 164. Fiber generation can be obtained from the edge 166 that is intended be disposed closest to the collection media (not shown). This embodiment is also much like the first embodiment except that both linear segments 168 of the band 162 are arranged for fiber production and may not be dipped in polymer solution. It should be noted that it is not necessarily each of the segments 168 be maintained in a constant distance. For example, it may be beneficial to generate different fibers of different characteristics to have different fiber generation spinning electrode strands arranged at different distances relative to the collection media. In this embodiment, pulleys 164 may take the form of sheaves other positioning structure to maintain positioning of the edge 166 relative to the collection media.

(deleted)

The use of the terms "a" and "an" and "the" and similar referents in the context of describing the invention (especially in the context of the following claims) is to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non- claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law.

## Claims

1. An apparatus for the production of fine fibers (110) onto a collection media (18), comprising:
a first electrode (42);
a second electrode (40) spaced from the first electrode (42), the second electrode (40) including strand entrained upon at least two guides (82);
an entrance region (32) and an exit region (34) spaced apart along a first path (80), wherein the collection media (18) is adapted to be driven along the first path (80) from the entrance region (32) to the exit region (34) in spaced relation from the second electrode (40);
a drive unit adapted to drive the strand, along the at least two guides (82) for movement along a second path (86) that is transverse to the first path (80);
a voltage source arranged to generate a voltage differential between the first and second electrodes (40, 42) for generating the spinning of fine fibers (110);
wherein the strand is an endless chain (70) of a plurality of discrete segments (72) separated by gaps (74), wherein each segment (72) typically provides at least one discrete spinning location (108) wherein polymer fine fibers (110) are electrospun during operation; and
wherein the strand is an endless strand driven about an endless path (80), wherein the second path (86) is a part of the endless path (80), the endless path (80) further including a return path (88) spaced from the second path (86), the endless strand being farther away from the first electrode (42) along the return path (88) than the second path (86).

2. The apparatus of claim 1, further including a dipping basin (54) adapted to contain a polymer solution, the endless strand along the return path (88) running through the dipping basin (54) for dipping into the polymer solution and thereby coating the endless strand with the polymer solution.

3. The apparatus of claim 1, wherein each of the segments (72) is a generally spherical ball (78).

4. The apparatus of claim 3, wherein the guides (82) comprises a pair of spaced apart wheels (82) rotatable about an axes that are generally parallel to the first path (80).

5. The apparatus of claim 1, wherein the strand is an endless serpentine belt (142) entrained upon three or more guides (82) for movement along an endless path, the endless serpentine belt (142) including multiple generally linear spans running transversely relative to the first path (80).

6. The apparatus of claim 5, further comprising a metering unit (64) connected to a supply for the polymer solution and at least one dispensing needle (154) having an outlet arranged to wet an edge of the serpentine belt (142).

7. The apparatus of claim 6, further comprising an unwind machine (16) and a rewind machine (20) arranged proximate the entrance region (32) and the exit region (34) respectively, and rolls of filtration media on the unwind machine (16) and the rewind machine (20), the rolls being connected by the collection media (18) whereby during operation filter media is unwound from the unwind machine (16), run along the first path (80) from the entrance region (32) to the exit region (34) and rewound on the rewind machine (20).

8. A filter media production system, comprising: a roll of substrate material supplying a sheet (18) of substrate material along a first path (80) through an entrance region (32) to an exit region (34) of a fine fiber generation machine, the sheet (18) having opposed side edges generally parallel to the first path (80), the fine fiber generation machine including at least one endless strand and a drive unit driving the strand along a second path (86) from a first guide to a second guide that is transverse relative to the first path (80), the strand being wetted with a polymer solution and subject to a voltage differential to generate fine fibers (110) that are deposited upon the substrate material; wherein the strand is driven about an endless path (80), wherein the second path (86) is a part of the endless path (80); the endless path (80) further including a return path (88) spaced from the second path (86), the strand being farther away from the first path (80) along the return path (88) than the second path (86).

9. The filter media production system of claim 8, further including a dipping basin (54) adapted to contain the polymer solution, the endless strand along the return path (88) running through the dipping basin (54) for dipping into the polymer solution and thereby coating the endless strand with polymer solution.

10. A method of generating fine fibers (110), comprising:
electro-spinning fine fibers (110) from an electrode at a plurality of spinning locations (108) arranged in a linear array from a polymer solution coating on the electrode;
facilitating relative linear movement between the collection media (18) and spinning locations (108) with the spinning locations (108) in spaced relation to the collection media (18);
depositing the fine fibers (110) on the collection media (18);
maintaining a constant spacing between the spinning locations (108) and the collection media (18);
periodically regenerating each of the spinning locations (108) with polymer solution coating; and
wherein the linear array includes multiple rows of spinning locations (108), the method including:
moving at least one first row of the spinning locations (108) in a first direction; and
moving at least one second row of the spinning locations (108) in a second direction.

11. The method of claim 10, wherein said periodically regenerating comprising:
dipping the spinning locations (108) into a polymer solution; and
running the collection media (18) over a planar support during said depositing.

12. The method of any of claims 10 or 11, wherein the electrode includes an endless strand and wherein the strand has a plurality of discrete segments (72) separated by gaps (74), further comprising:
entraining the endless strand upon at least two pulleys (164);
running the endless strand along an endless path around the at least two pulleys (164);
generating fine fibers (110) from a first portion of the endless strand that is exposed and facing the collection media (18) by spinning fine fibers (110) typically from each of the discrete segments (72), the spinning locations (108) migrating across the media transversely relative to the first path (80) as the endless strand is run along the second path (86); and
dipping a second portion of the endless strand in the polymer solution.
spinning fine fibers (110) of polymer material onto the collection media (18) along a plurality of spinning locations (108) along the at least one strand due to the voltage differential; and
running the strand along a second path (86) transverse to the first path (80).

## Patentansprüche

1. Einrichtung zur Herstellung von Feinfasern (110) auf einem Sammelmedium (18), umfassend:
eine erste Elektrode (42);
eine von der ersten Elektrode (42) beabstandete zweite Elektrode (40), wobei die zweite Elektrode (40) einen auf mindestens zwei Führungen (82) geführten Strang umfasst;
einen Eintrittsbereich (32) und einen Austrittsbereich (34), die entlang eines ersten Pfads (80) beabstandet sind, wobei das Sammelmedium (18) ausgelegt ist, entlang des ersten Pfads (80) von dem Eintrittsbereich (32) zu dem Austrittsbereich (34) von der zweiten Elektrode (40) beabstandet angetrieben zu sein;
eine Antriebseinheit, die ausgelegt ist, den Strang entlang der mindestens zwei Führungen (82) für eine Bewegung entlang eines zweiten Pfads (86), der quer zu dem ersten Pfad (80) ist, anzutreiben;
eine Spannungsquelle, die angeordnet ist, eine Spannungsdifferenz zwischen den ersten und zweiten Elektroden (40, 42) zu erzeugen, um das Spinnen von Feinfasern (110) zu erzeugen;
wobei der Strang eine Endloskette (70) mehrerer einzelner durch Spalte (74) getrennter Segmente (72) ist, wobei jedes Segment (72) in der Regel mindestens eine einzelne Spinnstelle (108) bereitstellt, wobei Polymerfeinfasern (110) während eines Betriebs elektrogesponnen werden; und wobei der Strang ein Endlosstrang ist, der um einen Endlospfad (80) angetrieben wird, wobei der zweite Pfad (86) ein Teil des Endlospfads (80) ist, wobei der Endlospfad (80) ferner einen Rückpfad (88) umfasst, der von dem zweiten Pfad (86) beabstandet ist, wobei der Endlosstrang weiter von der ersten Elektrode (42) entlang des Rückpfads (88) als des zweiten Pfads (86) entfernt ist.

2. Einrichtung nach Anspruch 1, ferner umfassend ein Tauchbecken (54), das ausgelegt ist, eine Polymerlösung aufzunehmen, wobei der Endlosstrang entlang des Rückpfads (88) durch das Tauchbecken (54) zum Eintauchen in die Polymerlösung und dadurch Beschichten des Endlosstrangs mit der Polymerlösung läuft.

3. Einrichtung nach Anspruch 1, wobei jedes der Segmente (72) eine im Allgemeinen sphärische Kugel (78) ist.

4. Einrichtung nach Anspruch 3, wobei die Führungen (82) ein Paar von voneinander beabstandeten Rädern (82) umfassen, die um Achsen drehbar sind, die im Allgemeinen parallel zu dem ersten Pfad (80) sind.

5. Einrichtung nach Anspruch 1, wobei der Strang ein Endloskeilriemen (142) ist, der auf drei oder mehr Führungen (82) für eine Bewegung entlang eines Endlospfads geführt ist, wobei der Endloskeilriemen (142) mehrere im Allgemeinen lineare Abschnitte umfasst, die quer in Relation zu dem ersten Pfad (80) laufen.

6. Einrichtung nach Anspruch 5, ferner umfassend eine Dosiereinrichtung (64), die mit einer Versorgung für die Polymerlösung und mindestens einer Abgabenadel (154) verbunden ist, die einen Auslass aufweist, der angeordnet ist, eine Kante des Keilriemens (142) zu benetzen.

7. Einrichtung nach Anspruch 6, ferner umfassend eine Abwickelmaschine (16) und eine Aufwickelmaschine (20), die in der Nähe des Eintrittsbereichs (32) bzw. des Austrittsbereichs (34) angeordnet sind, und Rollen von Filtermedium an der Abwickelmaschine (16) und der Aufwickelmaschine (20), wobei die Rollen durch das Sammelmedium (18) verbunden sind, wobei während eines Betriebs Filtermedium von der Abwickelmaschine (16) abgewickelt wird, entlang des ersten Pfads (80) von dem Eintrittsbereich (32) zu dem Austrittsbereich (34) läuft und auf der Aufwickelmaschine (20) aufgewickelt wird.

8. Filtermediumherstellungssystem, umfassend: eine Rolle von Substratmaterial, die eine Bahn (18) von Substratmaterial entlang eines ersten Pfads (80) durch einen Eintrittsbereich (32) zu einem Austrittsbereich (34) einer Feinfasererzeugungsmaschine zuführt, wobei die Bahn (18) gegenüberliegende Seitenkanten im Allgemeinen parallel zu dem ersten Pfad (80) aufweist, wobei die Feinfasererzeugungsmaschine mindestens einen Endlosstrang und eine Antriebseinheit umfasst, die den Strang entlang eines zweiten Pfads (86) von einer ersten Führung zu einer zweiten Führung, die quer in Relation zu dem ersten Pfad (80) ist, antreibt, wobei der Strang mit einer Polymerlösung benetzt und einer Spannungsdifferenz ausgesetzt wird, um Feinfasern (110) zu erzeugen, die auf das Substratmaterial abgeschieden werden; wobei der Strang um einen Endlospfad (80) angetrieben wird, wobei der zweite Pfad (86) ein Teil des Endlospfads (80) ist; wobei der Endlospfad (80) ferner einen Rückpfad (88) umfasst, der von dem zweiten Pfad (86) beabstandet ist, wobei der Strang weiter von dem ersten Pfad (80) entlang des Rückpfads (88) als des zweiten Pfads (86) entfernt ist.

9. Filtermediumherstellungssystem nach Anspruch 8, ferner umfassend ein Tauchbecken (54), das ausgelegt ist, die Polymerlösung aufzunehmen, wobei der Endlosstrang entlang des Rückpfads (88) durch das Tauchbecken (54) zum Eintauchen in die Polymerlösung und dadurch Beschichten des Endlosstrangs mit der Polymerlösung läuft.

10. Verfahren zum Erzeugen von Feinfasern (110), umfassend:
Elektrospinnen von Feinfasern (110) von einer Elektrode an mehreren in einer linearen Anordnung angeordneten Spinnstellen (108) aus einer Polymerlösungsbeschichtung an der Elektrode;
Ermöglichen einer relativen linearen Bewegung zwischen dem Sammelmedium (18) und Spinnstellen (108), wobei die Spinnstellen (108) von dem Sammelmedium (18) beabstandet sind;
Abscheiden der Feinfasern (110) auf das Sammelmedium (18) ;
Aufrechterhalten eines konstanten Abstands zwischen den Spinnstellen (108) und dem Sammelmedium (18);
periodisches Erneuern der Polymerlösungsbeschichtung jeder der Spinnstellen (108); und
wobei die lineare Anordnung mehrere Reihen von Spinnstellen (108) umfasst, wobei das Verfahren umfasst:
Bewegen mindestens einer ersten Reihe der Spinnstellen (108) in eine erste Richtung; und
Bewegen mindestens einer zweiten Reihe der Spinnstellen (108) in eine zweite Richtung.

11. Verfahren nach Anspruch 10, wobei das periodische Erneuern umfasst:
Tauchen der Spinnstellen (108) in eine Polymerlösung; und
Laufenlassen des Sammelmediums (18) über eine ebenflächige Auflage während des Abscheidens.

12. Verfahren nach einem der Ansprüche 10 oder 11, wobei die Elektrode einen Endlosstrang umfasst und wobei der Strang mehrere einzelne durch Spalte (74) getrennte Segmente (72) aufweist, ferner umfassend:
Führen des Endlosstrangs auf mindestens zwei Scheiben (164) ;
Laufenlassen des Endlosstrangs entlang eines Endlospfads um die mindestens zwei Scheiben (164);
Erzeugen von Feinfasern (110) aus einem ersten Abschnitt des Endlosstrangs, der freiliegt und dem Sammelmedium (18) zugewandt ist, durch Spinnen von Feinfasern (110) in der Regel von jedem der einzelnen Segmente (72), wobei die Spinnstellen (108) über das Medium quer in Relation zu dem ersten Pfad (80) wandern, während der Endlosstrang entlang des zweiten Pfads (86) läuft; und
Tauchen eines zweiten Abschnitts des Endlosstrangs in die Polymerlösung,
Spinnen von Feinfasern (110) von Polymermaterial auf das Sammelmedium (18) entlang mehrerer Spinnstellen (108) entlang des mindestens einen Strangs aufgrund der Spannungsdifferenz; und
Laufenlassen des Strangs entlang eines zweiten Pfads (86) quer zu dem ersten Pfad (80).

## Revendications

1. Appareil pour la production de fibres fines (110) sur un milieu de recueil (18), comprenant :
une première électrode (42) ;
une seconde électrode (40) espacée de la première électrode (42), la seconde électrode (40) comprenant un brin entraîné sur au moins deux guides (82) ;
une région d'entrée (32) et une région de sortie (34) espacées le long d'un premier trajet (80), le milieu de recueil (18) étant adapté pour être entraîné le long du premier trajet (80) de la région d'entrée (32) à la région de sortie (34) en relation espacée de la seconde électrode (40) ;
une unité d'entraînement adaptée pour entraîner le brin, le long des au moins deux guides (82) pour un mouvement le long d'un second trajet (86) qui est transversal au premier trajet (80) ;
une source de tension agencée pour générer un différentiel de tension entre les première et seconde électrodes (40, 42) pour générer le filage de fibres fines (110) ;
le brin étant une chaîne sans fin (70) d'une pluralité de segments discrets (72) séparés par des intervalles (74), chaque segment (72) fournissant typiquement au moins un emplacement de filage discret (108), des fibres fines de polymère (110) étant électrofilées pendant le fonctionnement ; et
le brin étant un brin sans fin entraîné autour d'un trajet sans fin (80), le second trajet (86) étant une partie du trajet sans fin (80), le trajet sans fin (80) comprenant en outre un trajet de retour (88) espacé du second trajet (86), le brin sans fin étant plus éloigné de la première électrode (42) le long du trajet de retour (88) que le second trajet (86).

2. Appareil selon la revendication 1, comprenant en outre un bassin d'immersion (54) adapté pour contenir une solution de polymère, le brin sans fin le long du trajet de retour (88) passant à travers le bassin d'immersion (54) pour l'immersion dans la solution de polymère et ainsi revêtir le brin sans fin avec la solution de polymère.

3. Appareil selon la revendication 1, chacun des segments (72) étant une bille généralement sphérique (78).

4. Appareil selon la revendication 3, les guides (82) comprenant une paire de roues espacées (82) pouvant tourner autour d'axes qui sont généralement parallèles au premier trajet (80).

5. Appareil selon la revendication 1, le brin étant une courroie en serpentin sans fin (142) entraînée sur trois ou plus de trois guides (82) pour un mouvement le long d'un trajet sans fin, la courroie en serpentin sans fin (142) comprenant de multiples travées généralement linéaires s'étendant transversalement par rapport au premier trajet (80).

6. Appareil selon la revendication 5, comprenant en outre une unité de dosage (64) reliée à une alimentation pour la solution de polymère et au moins une aiguille de distribution (154) ayant une sortie agencée pour mouiller un bord de la courroie en serpentin (142).

7. Appareil selon la revendication 6, comprenant en outre une machine de déroulement (16) et une machine de réenroulement (20) agencées respectivement à proximité de la région d'entrée (32) et de la région de sortie (34), et des rouleaux de milieu filtrant sur la machine de déroulement (16) et la machine de réenroulement (20), les rouleaux étant reliés par le milieu de recueil (18), moyennant quoi, pendant le fonctionnement, le milieu filtrant est déroulé de la machine de déroulement (16), se déplace le long du premier trajet (80) de la région d'entrée (32) à la région de sortie (34) et est réenroulé sur la machine de réenroulement (20).

8. Système de production de milieu filtrant, comprenant : un rouleau de matériau de substrat fournissant une feuille (18) de matériau de substrat le long d'un premier trajet (80) à travers une région d'entrée (32) vers une région de sortie (34) d'une machine de génération de fibres fines, la feuille (18) ayant des bords latéraux opposés généralement parallèles au premier trajet (80), la machine de génération de fibres fines comprenant au moins un brin sans fin et une unité d'entraînement entraînant le brin le long d'un second trajet (86) d'un premier guide à un second guide qui est transversal par rapport au premier trajet (80), le brin étant mouillé avec une solution de polymère et soumis à une différence de tension pour générer des fibres fines (110) qui sont déposées sur le matériau de substrat ; le brin étant entraîné autour d'un trajet sans fin (80), le second trajet (86) faisant partie du trajet sans fin (80) ; le trajet sans fin (80) comprenant en outre un trajet de retour (88) espacé du second trajet (86), le brin étant plus éloigné du premier trajet (80) le long du trajet de retour (88) que du second trajet (86).

9. Système de production de milieu filtrant selon la revendication 8, comprenant en outre un bassin d'immersion (54) adapté pour contenir la solution de polymère, le brin sans fin le long du trajet de retour (88) passant à travers le bassin d'immersion (54) pour l'immersion dans la solution de polymère et pour revêtir ainsi le brin sans fin avec la solution de polymère.

10. Procédé de génération de fibres fines (110), comprenant :
l'électrofilage de fibres fines (110) à partir d'une électrode en une pluralité d'emplacements de filage (108) agencés en une rangée linéaire à partir d'un revêtement de solution de polymère sur l'électrode ;
le fait de faciliter le mouvement linéaire relatif entre le milieu de recueil (18) et les emplacements de filage (108), avec les emplacements de filage (108) espacés par rapport au milieu de recueil (18) ;
le dépôt des fibres fines (110) sur le milieu de recueil (18) ;
le maintien d'un espacement constant entre les emplacements de filage (108) et le milieu de recueil (18) ;
la régénération périodique de chacun des emplacements de filage (108) avec un revêtement de solution de polymère ; et
le réseau linéaire comprenant de multiples rangées d'emplacements de filage (108), le procédé comprenant :
le déplacement d'au moins une première rangée des emplacements de filage (108) dans une première direction ; et
le déplacement d'au moins une seconde rangée des emplacements de filage (108) dans une seconde direction.

11. Procédé selon la revendication 10, ladite régénération périodique comprenant :
l'immersion des emplacements de filage (108) dans une solution de polymère ; et
le passage du milieu de recueil (18) sur un support planaire pendant ledit dépôt.

12. Procédé selon l'une quelconque des revendications 10 et 11, l'électrode comprenant un brin sans fin et le brin ayant une pluralité de segments discrets (72) séparés par des espaces (74), comprenant en outre :
l'entraînement du brin sans fin sur au moins deux poulies (164) ;
le passage du brin sans fin le long d'un trajet sans fin autour des au moins deux poulies (164) ;
la génération de fibres fines (110) à partir d'une première partie du brin sans fin qui est exposée et qui fait face au milieu de recueil (18) en filant des fibres fines (110) typiquement à partir de chacun des segments discrets (72), les emplacements de filage (108) migrant à travers le milieu transversalement par rapport au premier trajet (80) lorsque le brin sans fin est déplacé le long du second trajet (86) ; et
l'immersion d'une seconde partie du fil sans fin dans la solution de polymère,
le filage de fibres fines (110) de matériau polymère sur le milieu de recueil (18) le long d'une pluralité d'emplacements de filage (108) le long de l'au moins un brin en raison de la différence de tension ; et
le passage du brin le long d'un second trajet (86) transversal au premier trajet (80).
